# EUROPÄISCHE PATENTSCHRIFT

(11) **EP 1 583 040 B1**
(45) Veröffentlichungstag und Bekanntmachung des Hinweises auf die Patenterteilung: **06.02.2008**
(21) Anmeldenummer: 04007575.6
(22) Anmeldetag: 29.03.2004
(51) Int. Cl.: G07C 5/04, G07C 5/08

(54) **Signalisierungseinrichtung**
Signalisation device
Dispositif de signalisation

(43) Veröffentlichungstag der Anmeldung: 05.10.2005
(73) Patentinhaber: Delphi Technologies, Inc., Troy, MI 48098 (US)
(72) Erfinder: Bienefeld, Axel, 90587 Obermichelbach (DE)
(74) Vertreter: Manitz, Finsterwald & Partner GbR

(56) Entgegenhaltungen:
- DE-A- 10 218 676
- FR-A- 2 444 304
- FR-A- 2 747 214
- US-A- 5 714 925
- US-A- 6 088 636
- US-A1- 2002 016 667
- US-B1- 6 232 874

## Beschreibung

Die Erfindung betrifft eine Signalisierungseinrichtung gemäß dem Oberbegriff des Anspruchs 1. Eine derartige Einrichtung ist aus der US-B- 6 232 874 bekannt.

Kraftfahrzeuge stellen ein immer komplexer werdendes Gesamtsystem dar, das dem Fahrer einerseits immer mehr Komfortmöglichkeiten bietet und andererseits zunehmend sicherheitsrelevante Systeme zur Verfügung stellt.

Es hat sich wiederholt gezeigt, dass zu den häufigsten Unfallursachen die Übermüdung des Fahrers zählt. Es besteht daher das Bedürfnis, die Sicherheit durch eine entsprechende Weiterbildung des mobilen Systems bzw. der diesem zugeordneten Einrichtungen weiter zu erhöhen.

Bei der aus der US-B-6 232 874 bekannten Einrichtung wird dem Fahrer das Erreichen einer vorgebbaren zusammenhängenden Fahrzeugbetriebsdauer signalisiert.

Aus der DE-A-102 18 676 ist eine Einrichtung zur Verarbeitung von Signalen fahrzeugeigener Sensoren und von vom Bediener eingegebener Informationen bekannt, bei der in Kopplung mit einem Navigationssystem und in Abhängigkeit von dem Anforderungsgrad der noch zurückzulegenden Fahrstrecke ein zeitliches Müdigkeitsprofil erstellt wird. Ferner werden Informationen zur Prävention von Müdigkeit per Sprache oder alphanumerischer Anzeige ausgegeben, wobei beispielsweise Rastplätze und Rasthäuser empfohlen werden.

Der Erfindung liegt die Aufgabe zugrunde, für eine weitere Optimierung der insbesondere sicherheitsrelevanten Systeme zu sorgen.

Diese Aufgabe wird nach der Erfindung dadurch gelost, dass über das Steuergerät und die diesem zugeordnete Ausgabeeinrichtung zusammen mit der Signalisierung eines jeweiligen Pausenvorschlags automatisch auch wenigstens ein für die jeweilige Pause geeigneter POI-Vorschlag (point of interest) signalisierbar ist, wobei die Anzeige der POI-Vorschläge (points of interest) über ein dem Steuergerät zugeordnetes Display in der Karte eines Navigationssystems erfolgt.

Mit einer solchen Signalisierungseinrichtung besteht nunmehr die Möglichkeit, den Fahrer in bestimmten zeitlichen Abständen automatisch an die Einhaltung von Fahrpausen zu erinnern und über das Steuergerät und die diesem zugeordnete Ausgabeeinrichtung zusammen mit der Signalisierung eines jeweiligen Pausenvorschlags automatisch auch wenigstens ein für die jeweilige Pause geeigneter POI-Vorschlag (point of interest; interessanter Ort in der Nähe) zu signalisieren. Dabei kann ein jeweiliger POI-Vorschlag z.B. dem Vorschlag eines nächstgelegenen Parkplatzes, Raststätte, Hotels, Restaurants, Schnellimbisses, Toiletten und/oder dergleichen umfassen.

Die betreffende Signalisierung kann also über das entsprechend programmierte Steuergerät des mobilen Systems bzw. Kraftfahrzeugs ausgelöst und über die dem Steuergerät zugeordnete akustische und/oder visuelle Ausgabeeinrichtung umgesetzt werden. Die jeweilige Art oder Form einer jeweiligen Signalisierung kann beispielsweise in wenigstens einem dem Steuergerät zugeordneten Speicher bereitgestellt sein und im Bedarfsfall aus diesem Speicher abgerufen werden.

Eine jeweilige akustische Signalisierung kann beispielsweise durch einen einzelnen Ton, eine Tonfolge und/oder eine Sprachausgabe erfolgen. Wie bereits erwähnt, kann ein solcher Ton, Tonfolge bzw. Sprachausgabe beispielsweise aus einem dem Steuergerät zugeordneten Speicher abgerufen werden.

Eine jeweilige visuelle Signalisierung kann unter anderem durch Einblendung von Daten in die Anzeige eines Displays, Anzeige eines Warnsymbols und/oder Anzeige von für die jeweiligen Pausen geeigneter POIs (points of interest; interessante Orte in der Nähe) erfolgen.

Die Fahrtzeit, nach der die Signalisierung erfolgt, kann fest vorgegeben oder auch variabel einstellbar sein.

Vorteilhafterweise ist die Fahrtzeit, nach der die Signalisierung erfolgt, in Abhängigkeit von der über eine entsprechende Sensorik und/oder Kommunikationsschnittstelle erfassbare Charakteristik der gefahrenen Strecke gewählt. So kann die Fahrzeit, nach der die Signalisierung erfolgt, beispielsweise davon abhängig sein, ob die Fahrt auf der Autobahn, der Landstraße oder im Stadtverkehr erfolgt. Entsprechende Informationen können beispielsweise über ein Navigationssystem erhalten werden.

Alternativ oder zusätzlich kann die Fahrtzeit, nach der die Signalisierung erfolgt, in Abhängigkeit von der Durchschnittsgeschwindigkeit, der Tageszeit, den Wetterverhältnissen, der Verkehrsdichte und/oder der vorzugsweise im Fahrgastraum vorherrschenden Temperatur gewählt sein, wobei dem Steuergerät zur Erfassung der betreffenden Größen wieder eine entsprechende Sensorik und/oder Kommunikationsschnittstelle zugeordnet sein kann.

Die Signalisierung ist zweckmäßigerweise deaktivierbar.

Die jeweiligen POI-Vorschläge (points of interest) können beispielsweise über eine Liste, durch Symbole und/oder akustisch, z.B. durch eine jeweilige Sprachausgabe, ausgegeben werden.

Von Vorteil ist auch, wenn die jeweiligen POI-Vorschläge (points of interest) individuell auf den jeweiligen Benutzer abgestimmt sind und/oder über die Tageszeit gesteuert unterschiedliche Vorschlagswerte umfassen. So kann mittags als Vorschlagswert beispielsweise eine sich in der Nähe befindliche Raststätte oder Restaurant signalisiert werden. Generell kommt als Vorschlagswert beispielsweise eine in der Nähe gelegene Schnellraststätte (z.B. Burger-King usw.) oder Rastplatz in Frage.

Ein jeweiliger POI-Vorschlag wird also insbesondere auch von der gewählten Straße und/oder Route abhängig sein (z.B. Rastplatz an der Autobahn, Restaurant in der Stadt, Gasthaus auf der Landstraße, usw.).

Bevorzugt umfasst ein jeweiliger POI-Vorschlag den Ort der geringsten Entfernung und/oder der kürzesten Fahrtzeit.

Gemäß einer weiteren bevorzugten praktischen Ausführungsform der erfindungsgemäßen Signalisierungseinrichtung ist zusammen mit einem jeweiligen Pausenvorschlag automatisch auch ein Vorschlag für die Pausenlänge signalisierbar. Dabei kann die vorgeschlagene Pausenlänge beispielsweise von der Gesamtfahrtzeit und den zuvor eingelegten Pausen abhängig sein.

Zweckmäßigerweise wird gleich zu Beginn einer jeweiligen Pause automatisch auch die betreffende Pausenlänge signalisiert.

Zu Beginn einer jeweiligen Pause wird zweckmäßigerweise automatisch ein dem Steuergerät zugeordneter Pausentimer aktiviert. Die Signalisierung des jeweiligen Pausenendes wird dann über diesen Pausentimer ausgelöst. Die betreffende Signalisierung erfolgt wieder über die dem Steuergerät zugeordnete akustische und/oder visuelle Ausgabeeinrichtung.

Auch der Pausentimer ist, wie bereits erwähnt, vorzugsweise wieder in dem Steuergerät des mobilen Systems bzw. Fahrzeugs integriert oder diesem zugeordnet.

Von Vorteil ist insbesondere auch, wenn über das Steuergerät und die diesem zugeordnete Ausgabeeinrichtung zusammen mit der Signalisierung eines jeweiligen Pausenvorschlags automatisch auch wenigstens ein Vorschlag für Bewegungs- und/oder Dehnungsübungen signalisiert- oder dargestellt wird. Ein solcher Vorschlag kann insbesondere über ein Display, vorzugsweise ein Display des mobilen Systems, dargestellt werden. Das betreffende Display ist vorzugsweise wieder mit dem Steuergerät des mobilen Systems bzw. Fahrzeugs verbunden bzw. diesem Steuergerät zugeordnet.

Grundsätzlich können weitere Tipps für die jeweiligen Pausen signalisierbar sein. Auch in diesem Fall erfolgt eine jeweilige Signalisierung vorzugsweise wieder automatisch, wobei sie insbesondere wieder über das Steuergerät des mobilen Systems bzw. Fahrzeugs auslösbar und über eine diesem zugeordnete akustische und/oder visuelle Ausgabeeinrichtung wie insbesondere Lautsprecher, Display usw. umsetzbar ist.

Bei einer zweckmäßigen praktischen Ausführungsform der erfindungsgemäßen Signalisierungseinrichtung ist für die Dauer einer jeweiligen Fahrt und/oder für die Dauer einer jeweiligen Pause jeweils eine Balkenanzeige vorgesehen, anhand der der zeitliche Verlauf sowie die restliche Dauer der Fahrt bzw. der Pause erkennbar sind. Dabei ist beispielsweise jeweils eine mit der Fortschrittsanzeige bei der Software-Installation bei PCs vergleich bare Balkenanzeige denkbar.

Auch eine solche Balkenanzeige ist vorzugsweise wieder deaktivierbar.

Von Vorteil ist insbesondere auch, wenn die Pausensignalisierung mit einer automatischen Tankstoppanzeige synchronisiert ist, d.h. eine jeweilige Tankstoppanzeige mit einer jeweiligen Pausensignalisierung kombiniert wird. Hierzu kann also insbesondere die Pausensignalisierung soweit vorgezogen bzw. verzögert werden, dass sie mit der Tankstoppanzeige zusammenfällt.

Bevorzugt umfasst das mobile System ein Kraftfahrzeug, das in der Lage ist, seine tatsächliche geographische Position zu erkennen. Dabei erhält das Kraftfahrzeug seine tatsächliche geographische Position beispielsweise von einem mitgeführten GPS-Empfänger oder dergleichen.

Bei einer bevorzugten praktischen Ausführungsform ist die Signalisierungseinrichtung also mit einem Navigationssystem kombiniert.

Nach einer weiteren vorteilhaften Ausführungsform kann der Pausenvorschlag in Abhängigkeit von der durch einen Sensor ermittelten Müdigkeit des Fahrers signalisiert werden. Derartige Sensoren sind grundsätzlich bekannt und erfassen beispielsweise den Lidschlag des Fahrers.

Die Erfindung wird im folgenden anhand von Ausführungsbeispielen unter Bezugnahme auf die Zeichnung näher beschrieben; in dieser zeigen:
- Figur 1: eine vereinfachte schematische Darstellung des Grundaufbaus einer Signalisierungseinrichtung und
- Figur 2: Beispiele für einen entsprechenden Software-Download in das Steuergerät über beliebige Übertragungswege und -medien.

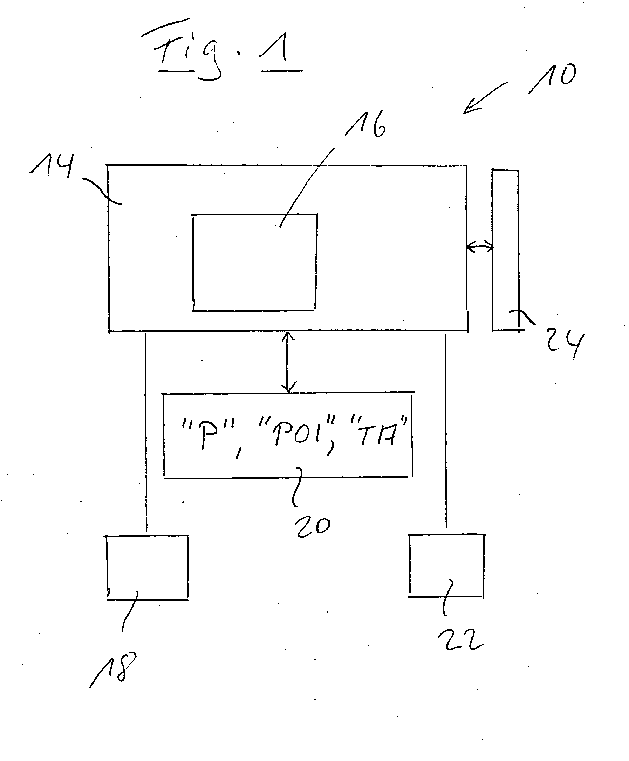

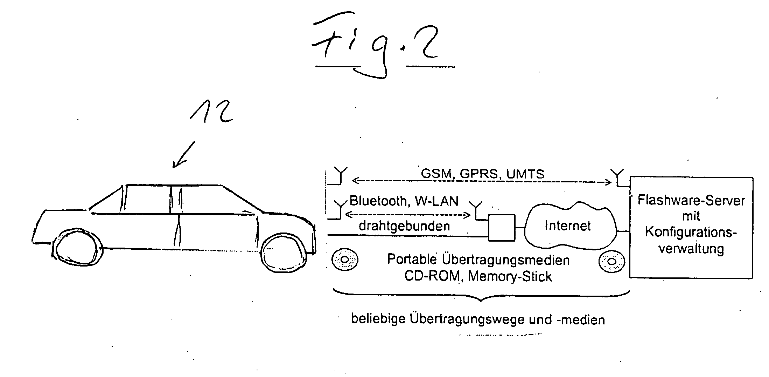

Figur 1 zeigt in vereinfachter schematischer Darstellung den Grundaufbau einer beispielhaften Ausführungsform einer Einrichtung 10 für ein mobiles System, hier z.B. ein Kraftfahrzeug 12 (vgl. Figur 2), zur Signalisierung eines jeweiligen Pausenvorschlags in Abhängigkeit von der Fahrtzeit.

Die Signalisierungseinrichtung 10 umfasst ein elektronisches Steuergerät 14 mit wenigstens einem Speicher 16 und der erforderlichen Prozessorleistung.

Dem elektronischen Steuergerät 14 sind wenigstens eine Eingabeeinrichtung 18 und wenigstens eine akustische und/oder visuelle Ausgabeeinrichtung 20 zugeordnet. Über die Eingabeeinrichtung 18 sind maximale Fahrtzeiten eingebbar, die vom jeweiligen Fahrer möglichst eingehalten werden sollen.

Dem Steuergerät 14 ist überdies wenigstens ein Sensor 22 zugeordnet, über den der Beginn einer jeweiligen Fahrt erfasst wird. Das Steuergerät 14 ist so programmiert, dass nach dem Ablauf einer jeweiligen eingegebenen Fahrtzeit über dieses Steuergerät 14 und die diesem zugeordnete Ausgabeeinrichtung 20 automatisch ein Pausenvorschlag signalisiert wird.

Bevorzugt wird über das Steuergerät 14 und die diesem zugeordnete Ausgabeeinrichtung 20 zusammen mit der Signalisierung eines jeweiligen Pausenvorschlags automatisch auch wenigstens ein für die jeweilige Pause geeigneter POI-Vorschlag (point of interest) signalisierbar:

Die Anzeige der POI-Vorschläge (points of interest) kann insbesondere über ein dem Steuergerät 14 zugeordnetes Display (Ausgabeeinrichtung 20), beispielsweise in der Karte eines Navigationssystems, erfolgen.

Die Fahrtzeit, nach der die Signalisierung erfolgt, kann z.B. in Abhängigkeit von der über eine entsprechende Sensorik und/oder Kommunikationsschnittstelle 24 erfassbaren Charakteristik der gefahrenen Strecke gewählt sein. Sie kann insbesondere auch von der Durchschnittsgeschwindigkeit, der Tageszeit, den Wetterverhältnissen, der Verkehrsdichte und/oder der vorzugsweise im Fahrgastraum vorherrschenden Temperatur abhängig sein. Die betreffenden Größen können dem Steuergerät beispielsweise wieder über eine entsprechende Sensorik und/oder Kommunikationsschnittstelle 24 zugänglich gemacht werden.

Zusammen mit einem jeweiligen Pausenvorschlag kann über das Steuergerät 14 und die diesem zugeordnete Ausgabeeinrichtung 20 automatisch auch jeweils ein Vorschlag für die betreffende Pausenlänge signalisiert werden. Dabei kann die vorgeschlagene Pausenlänge in Abhängigkeit von der Gesamtfahrtzeit und den zuvor eingelegten Pausen gewählt sein.

Über das Steuergerät 14 und die diesem zugeordnete Ausgabeeinrichtung 20 kann zusammen mit der Signalisierung eines jeweiligen Pausenvorschlags automatisch beispielsweise auch wenigstens ein Vorschlag für Bewegungs- und/oder Dehnungsübungen signalisiert- oder dargestellt werden.

Für die Dauer einer jeweiligen Fahrt und/oder für die Dauer einer jeweiligen Pause kann jeweils eine Balkenanzeige vorgesehen sein. Anhand einer solchen Balkenanzeige kann dann der zeitliche Verlauf sowie die restliche Dauer der Fahrt bzw. der Pause abgelesen werden.

Bei dem in der Figur 1 dargestellten Ausführungsbeispiel wird über das Steuergerät (14) und die diesem zugeordnete Ausgabeeinrichtung (20) zusammen mit der Signalisierung eines jeweiligen Pausenvorschlags "P" automatisch auch wenigstens ein für die jeweilige Pause geeigneter POI-Vorschlag (point of interest) signalisiert. Überdies besteht im vorliegenden Fall auch die Möglichkeit, die Pausensignalisierung "P" mit einer jeweiligen automatischen Tankstoppanzeige "TA" zu synchronisieren, d.h. eine jeweilige Pausensignalisierung "P" mit einer anstehenden Tankstoppanzeige "TA" zu kombinieren. Dabei kann die jeweilige Pausensignalisierung "P" oder Tankstoppanzeige "TA" soweit vorgezogen bzw. verzögert werden, dass die beiden Ausgaben zusammenfallen.

Sowohl die erstmalige Installation der erforderlichen Software als auch die jeweilige Aktualisierung der bestehenden Software kann insbesondere durch einen sogenannten Software-Download in das Steuergerät 14 geschehen. Ein jeweiliges Steuergerät 14, in das neue Software geladen werden kann, besitzt vorzugsweise einen sogenannten Flashspeicher, der bei einem Software-Download zuerst gelöscht und dann mit der neuen Software wieder beschrieben wird. Den Vorgang, neue Software in das Steuergerät 14 zu laden, nennt man Flashen und die Software, die in das Steuergerät 14 geladen wird, ist die sogenannte Flashware.

Wie sich aus der Darstellung gemäß Figur 2 ergibt, kann die zu ladende Software (Flashware) insbesondere auch auf einem Flashware-Server gelagert werden. Sie kann beispielsweise über folgende Wege und Medien in das Fahrzeug gelangen:
- drahtlos über GSM, GPRS, UMTS oder über Broadcast-Netze wie DAB von der Infrastruktur,
- über Bluetooth, Wireless LAN oder drahtgebunden in der Werktätte, an Software-Tankstellen oder am Band,
- über portable Übertragungsmedien wie CD-ROM oder USB Memory-Stick.

### Bezugszeichenliste

- 10: Signalisierungseinrichtung
- 12: mobiles System, Kraftfahrzeug
- 14: elektronisches Steuergerät
- 16: Speicher
- 18: Eingabeeinrichtung
- 20: Ausgabeeinrichtung
- 22: Sensor
- 24: Sensorik, Kommunikationsschnittstelle

## Patentansprüche

1. Einrichtung (10) für ein mobiles System (12) wie insbesondere ein Kraftfahrzeug zur Signalisierung eines jeweiligen Pausenvorschlags in Abhängigkeit von der Fahrtzeit, mit einem wenigstens einen Speicher (16) umfassenden elektronischen Steuergerät (14), dem wenigstens eine Eingabeeinrichtung (18) und wenigstens eine akustische und/oder visuelle Ausgabeeinrichtung (20) zugeordnet sind, wobei über die Eingabeeinrichtung (18) maximale Fahrtzeiten eingebbar sind, dem Steuergerät (14) überdies wenigstens ein Sensor (22) zugeordnet ist, über den der Beginn einer jeweiligen Fahrt erfasst wird, und das Steuergerät (14) so programmiert ist, dass nach dem Ablauf einer jeweiligen eingegebenen Fahrtzeit über dieses Steuergerät (14) und die diesem zugeordnete Ausgabeeinrichtung (20) automatisch ein Pausenvorschlag signalisiert wird,
**dadurch gekennzeichnet,**
**dass** über das Steuergerät (14) und die diesem zugeordnete Ausgabeeinrichtung (20) zusammen mit der Signalisierung eines jeweiligen Pausenvorschlags automatisch auch wenigstens ein für die jeweilige Pause geeigneter POI-Vorschlag (point of interest) signalisierbar ist, wobei die Anzeige der POI-Vorschläge (points of interest) über ein dem Steuergerät (14) zugeordnetes Display in der Karte eines Navigationssystems erfolgt.

2. Signalisierungseinrichtung nach Anspruch 1,
**dadurch gekennzeichnet,**
**dass** die Fahrtzeit, nach der die Signalisierung erfolgt, in Abhängigkeit von der über eine entsprechende Sensorik und/oder Kommunikationsschnittstelle (24) erfassbaren Charakteristik der gefahrenen Strecke gewählt ist.

3. Signalisierungseinrichtung nach einem der vorhergehenden Ansprüche,
**dadurch gekennzeichnet,**
**dass** die Fahrtzeit, nach der die Signalisierung erfolgt, in Abhängigkeit von der Durchschnittsgeschwindigkeit, der Tageszeit, den Wetterverhältnissen, der Verkehrsdichte und/oder der vorzugsweise im Fahrgastraum vorherrschenden Temperatur gewählt ist, wobei dem Steuergerät (14) zur Erfassung der betreffenden Größen eine entsprechende Sensorik und/oder Kommunikationsschnittstelle (24) zugeordnet ist.

4. Signalisierungseinrichtung nach einem der vorhergehenden Ansprüche,
**dadurch gekennzeichnet,**
**dass** die jeweiligen POI-Vorschläge (points of interest) individuell auf den jeweiligen Benutzer abgestimmt sind und/oder über die Tageszeit gesteuert unterschiedliche Vorschlagswerte umfassen.

5. Signalisierungseinrichtung nach einem der vorhergehenden Ansprüche,
**dadurch gekennzeichnet,**
**dass** ein jeweiliger POI-Vorschlag (point of interest) den Ort der geringsten Entfernung und/oder der kürzesten Fahrtzeit umfasst.

6. Signalisierungseinrichtung nach einem der vorhergehenden Ansprüche,
**dadurch gekennzeichnet,**
**dass** über das Steuergerät (14) und die diesem zugeordnete Ausgabeeinrichtung (20) zusammen mit einem jeweiligen Pausenvorschlag automatisch auch ein Vorschlag für die betreffende Pausenlänge signalisiert wird.

7. Signalisierungseinrichtung nach Anspruch 6,
**dadurch gekennzeichnet,**
**dass** die vorgeschlagene Pausenlänge von der Gesamtfahrtzeit und den zuvor eingelegten Pausen abhängig ist.

8. Signalisierungseinrichtung nach Anspruch 6 oder 7,
**dadurch gekennzeichnet,**
**dass** zu Beginn einer jeweiligen Pause automatisch auch die Pausenlänge signalisiert wird.

9. Signalisierungseinrichtung nach einem der vorhergehenden Ansprüche,
**dadurch gekennzeichnet,**
**dass** das Steuergerät (14) einen Pausentimer umfasst, der zu Beginn einer jeweiligen Pause automatisch aktiviert wird.

10. Signalisierungseinrichtung nach einem der vorhergehenden Ansprüche,
**dadurch gekennzeichnet,**
**dass** über das Steuergerät (14) und die diesem zugeordnete Ausgabeeinrichtung zusammen mit der Signalisierung eines jeweiligen Pausenvorschlags automatisch auch wenigstens ein Vorschlag für Bewegungs- und/oder Dehnungsübungen signalisiert- oder dargestellt wird.

11. Signalisierungseinrichtung nach einem der vorhergehenden Ansprüche,
**dadurch gekennzeichnet,**
**dass** für die Dauer einer jeweiligen Fahrt und/oder für die Dauer einer jeweiligen Pause jeweils eine Balkenanzeige vorgesehen ist, anhand der der zeitliche Verlauf sowie die restliche Dauer der Fahrt bzw. der Pause erkennbar sind.

12. Signalisierungseinrichtung nach einem der vorhergehenden Ansprüche,
**dadurch gekennzeichnet,**
**dass** die Pausensignalisierung mit einer automatischen Tankstoppanzeige synchronisiert ist, d.h. eine jeweilige Tankstoppanzeige mit einer jeweiligen Pausensignalisierung kombiniert wird.

13. Signalisierungseinrichtung nach einem der vorhergehenden Ansprüche,
**dadurch gekennzeichnet,**
**dass** der Pausenvorschlag in Abhängigkeit von der durch einen Sensor ermittelten Müdigkeit des Fahrers signalisiert wird.

## Claims

1. A device (10) for a mobile system (12), such as in particular a motor vehicle, for the signaling of a respective proposed break in dependence on the travel time, comprising an electronic control device (14) which includes at least one memory (16) and with which at least one input device (18) and at least one acoustic and/or visual output device (20) are associated, with maximum travel times being able to be input via the input device (18), with at least one sensor (22) moreover being associated with the control device (14) and via which the start of a respective journey is detected, and the control device (14) being programmed such that, after the end of a respectively input travel time, a proposed break is signaled automatically via this control device (14) and the output device (20) associated with it,
**characterized in that**, together with the signaling of a respective proposed break, at least one proposed POI (point of interest) suitable for the respective break can also be automatically signaled via the control device (14) and the output device (20) associated with it, with the display of the POI's (points of interest) taking place on the map of a navigation system via a display associated with the control device (14).

2. A signaling device in accordance with claim 1, **characterized in that** the travel time after which the signaling takes place is selected in dependence on the characteristic of the distance traveled detectable via a corresponding sensor system and/or communications interface (24).

3. A signaling device in accordance with any one of the preceding claims, **characterized in that** the travel time after which the signaling takes place is selected in dependence on the average speed, on the time of day, on the weather conditions, on the traffic density and/or on the temperature preferably prevailing in the passenger compartment, with a corresponding sensor system and/or communications interface (24) being associated with the control device (14) for the detection of the respective parameters.

4. A signaling device in accordance with any one of the preceding claims, **characterized in that** the respective proposed POI's (points of interest) are matched individually to the respective user and/or include different proposed values controlled via the time of day.

5. A signaling device in accordance with any one of the preceding claims, **characterized in that** a respective proposed POI (point of interest) includes the destination with the shortest distance and/or the shortest travel time.

6. A signaling device in accordance with any one of the preceding claims, **characterized in that** a proposal for the relevant length of break is also automatically signaled via the control device (14) and the output device (20) associated with it together with a respective proposed break.

7. A signaling device in accordance with claim 6, **characterized in that** the proposed length of a break is dependent on the total travel time and on the breaks previously taken.

8. A signaling device in accordance with claim 6 or claim 97 **characterized in that** the length of a break is also automatically signaled at the start of a respective break.

9. A signaling device in accordance with any one of the preceding claims, **characterized in that** the control device (14) includes a break timer which is automatically activated at the start of a respective break.

10. A signaling device in accordance with any one of the preceding claims, **characterized in that** at least one proposal for movement exercises and/or stretching exercises is also automatically signaled or presented via the control device (14) and the output device associated with it together with the signaling of a respective proposed break.

11. A signaling device in accordance with any one of the preceding claims, **characterized in that** a bar display is respectively provided for the length of a respective journey and/or for the length of a respective break, with reference to which a time based plot and the remaining duration of the journey or of the break can be recognized.

12. A signaling device in accordance with any one of the preceding claims, **characterized in that** the break signaling is synchronized with an automatic refueling stop display, i.e. a respective refueling stop display is combined with a signaling of a respective break.

13. A signaling device in accordance with any one of the preceding claims, **characterized in that** the proposed break is signaled in dependence on the tiredness of the driver determined by a sensor.

## Revendications

1. Dispositif (10) pour un système mobile (12), en particulier, un véhicule automobile, pour signaliser une proposition de pause respective en fonction du temps de conduite, comprenant un appareil de commande électronique (14) comprenant au moins une mémoire (16), auquel sont affectés au moins un dispositif d'entrée (18) et au moins un dispositif de sortie acoustique et/ou visuel (20), dans lequel des temps de conduite maximaux peuvent être saisis via le dispositif d'entrée (18), l'appareil de commande (14) comportant en outre au moins un capteur (22), qui permet d'enregistrer le début d'un trajet respectif et l'appareil de commande (14) étant programmé de manière à signaliser automatiquement une proposition de pause à l'issue d'un temps de conduite respectif saisi via cet appareil de commande (14) et le dispositif de sortie (20) qui lui est affecté,
**caractérisé en ce que**, conjointement avec la signalisation d'une proposition de pause respective, au moins une proposition de point d'intérêt (POI) convenant à la pause respective peut également être signalisée automatiquement par le biais de l'appareil de commande (14) et du dispositif de sortie (20) qui lui est affecté, l'affichage des propositions de POI (points d'intérêt) se faisant dans la carte d'un système de navigation sur un écran affecté à l'appareil de commande (14).

2. Dispositif de signalisation selon la revendication 1,
**caractérisé en ce que** le temps de conduite, à l'issue duquel s'effectue la signalisation, est choisi en fonction de la caractéristique du parcours effectué, qui peut être enregistrée par un système de détection et/ou une interface de communication (24) correspondants.

3. Dispositif de signalisation selon l'une quelconque des revendications précédentes,
**caractérisé en ce que** le temps de conduite, à l'issue duquel s'effectue la signalisation, est choisi en fonction de la vitesse moyenne, du moment de la journée, des conditions météorologiques, de la densité du trafic et/ou de la température régnant de préférence dans l'espace passagers, un système de détection et/ou une interface de communication (24) correspondants étant affectés à l'appareil de commande (14) pour saisir les grandeurs concernées.

4. Dispositif de signalisation selon l'une quelconque des revendications précédentes,
**caractérisé en ce que** les propositions de POI (points d'intérêt) respectives sont adaptées individuellement à l'utilisateur respectif et/ou comprennent des valeurs de proposition différentes conditionnées par le moment de la journée.

5. Dispositif de signalisation selon l'une quelconque des revendications précédentes,
**caractérisé en ce qu'**une proposition de POI (point d'intérêt) respective comprend le lieu correspondant à la plus faible distance et/ou au temps de conduite le plus court.

6. Dispositif de signalisation selon l'une quelconque des revendications précédentes,
**caractérisé en ce qu'**une proposition pour la longueur de pause concernée est également signalisée automatiquement par le biais de l'appareil de commande (14) et du dispositif de sortie (20) qui lui est affecté, conjointement avec une proposition de pause respective.

7. Dispositif de signalisation selon la revendication 6,
**caractérisé en ce que** la longueur de pause proposée dépend du temps de conduite total et des pauses faites auparavant.

8. Dispositif de signalisation selon la revendication 6 ou 7,
**caractérisé en ce que** la longueur de pause est également signalisée automatiquement au début d'une pause respective.

9. Dispositif de signalisation selon l'une quelconque des revendications précédentes,
**caractérisé en ce que** l'appareil de commande (14) comprend une minuterie de pause, qui est activée automatiquement au début d'une pause respective.

10. Dispositif de signalisation selon l'une quelconque des revendications précédentes,
**caractérisé en ce qu'**au moins une proposition d'exercices de mouvement et/ou d'étirement est également signalisée ou représentée automatiquement par le biais de l'appareil de commande (14) et du dispositif de sortie qui lui est affecté, conjointement avec la signalisation d'une proposition de pause respective.

11. Dispositif de signalisation selon l'une quelconque des revendications précédentes,
**caractérisé en ce qu'**il est prévu, pour la durée d'un trajet respectif et/ou pour la durée d'une pause respective, respectivement un affichage à barre, à l'aide duquel on peut identifier l'évolution dans le temps ainsi que la durée restante du trajet ou de la pause.

12. Dispositif de signalisation selon l'une quelconque des revendications précédentes,
**caractérisé en ce que** la signalisation de pause est synchronisée avec un affichage automatique d'arrêt à la pompe, c'est-à-dire qu'un affichage d'arrêt à la pompe respectif est combiné à une signalisation de pause respective.

13. Dispositif de signalisation selon l'une quelconque des revendications précédentes,
**caractérisé en ce que** la proposition de pause est signalisée en fonction de la fatigue du conducteur déterminée par un capteur.
